Europäisches Patentamt

European Patent Office

Office européen des brevets

(11) Veröffentlichungsnummer: **0 131 276**
**A2**

(12) # EUROPÄISCHE PATENTANMELDUNG

(21) Anmeldenummer: **84107907.2**

(51) Int. Cl.⁴: **E 03 F 9/00**

(22) Anmeldetag: **06.07.84**

(30) Priorität: **07.07.83 DE 3324525**

(43) Veröffentlichungstag der Anmeldung:
**16.01.85 Patentblatt 85/3**

(84) Benannte Vertragsstaaten:
**AT BE CH DE FR GB IT LI LU NL SE**

(71) Anmelder: **Klass, Georg**
**Fuggerstrasse 11**
**D-8087 Türkenfeld(DE)**

(71) Anmelder: **Kräutner, Georg**
**Engadiner Strasse 24**
**D-8000 München 71(DE)**

(72) Erfinder: **Klass, Georg**
**Fuggerstrasse 11**
**D-8087 Türkenfeld(DE)**

(72) Erfinder: **Kräutner, Georg**
**Engadiner Strasse 24**
**D-8000 München 71(DE)**

(74) Vertreter: **Patentanwälte Grünecker, Dr. Kinkeldey, Dr.**
**Stockmair, Dr. Schumann, Jakob, Dr. Bezold, Meister,**
**Hilgers, Dr. Meyer-Plath**
**Maximilianstrasse 58**
**D-8000 München 22(DE)**

(54) **In einen Abwasserkanal einsenkbare Umlenk- und Leitvorrichtung für einen Hochdruckwasserschlauch.**

(57) Eine in einem Abwasserkanalschacht (1) einsenkbare, auf der Kanalsohle (7) abstützfähige Umlenk- und Leitvorrichtung mit Führungsrollen (16, 17) für einen Hochdruckwasserschlauch (4), der an seinem vorauslaufenden Ende eine Kanalreinigungsdüse (3) aufweist, und durch Rückstoßstrahlen aus der Düse durch den Kanal (2) ziehbar ist. Die Neuerung wird darin gesehen, daß die Führungsrollen (16, 17) an einem Arm (11) befestigt sind, der an einem steifen Saugleitungsmundstück (5) angelenkt ist, im frei herabhängenden Zustand unter das Saugleitungsmundstück (5) hinabragt und auf der Kanalsohle (7) in eine den Hochdruckschlauch (4) etwa in Sohlenneigung ausrichtende Arbeitsposition schwenkbar ist.

Fig.: 4

Croydon Printing Company Ltd.

GRUNECKER, KINKELDEY STOCKMAIR & PARTNER

PATENTANWALTE
EUROPEAN PATENT ATTORNEYS

A GRUNECKER DIPL-ING
DR H KINKELDEY DIPL-ING
DR W STOCKMAIR DIPL-ING AE E ISALTECH
DR K SCHUMANN DIPL-PHYS
P H JAKOB DIPL-ING
DR G BEZOLD DIPL-CHEM
W MEISTER DIPL-ING
H HILGERS DIPL-ING
DR H MEYER-PLATH DIPL-ING

8000 MÜNCHEN 22
MAXIMILIANSTRASSE 58

6. Juli 1984
EP 1875-40/st

0131276

Klaß, Georg

Kräutner, Georg

---

In einen Abwasserkanal einsenkbare
Umlenk- und Leitvorrichtung für einen
Hochdruckwasserschlauch

---

Die Erfindung betrifft eine in einen Abwasserkanal einsenkbare, auf der Kanalsohle abstützfähige Umlenk- und Leitvorrichtung mit Führungsrollen für einen Hochdruckwasserschlauch, der an seinem vorauslaufenden Ende eine Kanalreinigungsdüse aufweist und durch Rückstoßstrahlen aus der Düse durch den Kanal ziehbar ist.

Eine Vorrichtung dieser Art ist bereits aus der DDR-Patentschrift 79 698 bekannt. Aus den DE-PS 26 48 851 und DE-AS 27 19 599 ist auch bereits ein Transportfahrzeug bekannt, das mit einem in Abwasserkanalschächte einsenkbaren Saugleitungsmundstück ausgestattet ist, das zum Ansaugen von beim Reinigen des Abwasserkanals anfallendem Schlamm in dem Behälter des Transportfahrzeugs verwandt wird.

Das Reinigen des Abwasserkanals erfolgt dabei durch eine mit Hochdruckwasser betriebene Strahldüse am vorlaufenden Ende eines Hochdruckschlauches, wobei sich die Strahldüse mit Rückstoßstrahlen von selbst in dem Kanal fortbewegt und den Hochdruckschlauch mit sich zieht. Das dafür benötigte Reinigungswasser wird dem Behälter des Transportfahrzeugs, dem der Schlamm zugeführt wird, nach Trennung von dem Schlamm und nach sorgfältiger Filterung, wieder entnommen und damit ein Wasserkreislauf gebildet, der nur selten das Ansteuern eines Hydranten zum Frischwassertanken mit damit verbundener Arbeitsunterbrechung erfordert.

Bei der Einführung des Hochdruckwasserschlauches in den Abwasserkanal ist es zunächst schwierig, die Kanalreinigungsdüse so in den Abwasserkanalschacht einzuführen, daß sie auf der Kanalsohle die richtige Richtung erhält. Bei dem selbsttätigen Fortschreiten der Kanalreinigungsdüse während des Betriebs muß sodann gleichfalls sichergestellt werden, daß der Schlauch reibungslos nachgeführt wird und nicht durch das Vorbeilaufen an scharfen Mauerkanten beschädigt wird. Das gleiche gilt für das Zurückholen des Schlauches nach der Durchführung der Arbeiten. Insbesondere auch um den Hochdruckwasserschlauch besser steuern zu können, wurden bisher der Hochdruckwasserschlauch und das Saugleitungsrohr getrennt in den Abwasserkanalschacht eingeführt, was eine umständliche und zeitraubende Handhabung bedeutet.

Der vorliegenden Erfindung liegt die Aufgabe zugrunde, den Hochdruckschlauch mühelos in den Abwasserkanalschacht und den eigentlichen Abwasserkanal selbsttätig einführen und wieder herausführen zu können, ohne daß ein Anstoßen an den Kanalkanten zu befürchten ist.

Diese Aufgabe wird erfindungsgemäß dadurch gelöst, daß die Führungsrollen an einem Arm befestigt sind, der an einem steifen Saugleitungsmundstück angelenkt ist, im frei herabhängenden Zustand unter das Saugleitungsmundstück hinabragt und auf der Kanalsohle in eine

0131276

den Hochdruckschlauch etwa in Sohlenneigung ausrichtende Arbeitsposition schwenkbar ist.

Auf diese Weise wird erreicht, daß zunächst das Saugleitungsrohr zusammen mit dem Hochdruckwasserschlauch gemeinsam in den Abwasserkanalschacht eingeführt werden kann, was eine wesentliche Arbeitserleichterung darstellt. Durch die Anordnung wird eine ausgezeichnete Versteifung derart erreicht, daß die Düse des Hochdruckwasserschlauches mühelos in die gewünschte Richtung gedreht und in dieser Richtung gehalten werden kann. Bei Erreichen der Kanalsohle wird die Düse sodann selbsttätig in die gewünschte Richtung parallel zur Kanalsohle umgelenkt, während gleichzeitig der Arm, über dessen Führungsrollen der Hochdruckwasserschlauch geführt wird, das untere Ende des Saugleitungsmundstücks in einem vorbestimmten Abstand von der Kanalsohle halten kann.

Da das Saugleitungsmundstück in jedem Fall, also auch, wenn es nur am Ende einer Schlauchleitung vorhanden ist, ein steifes Rohrstück ist, läßt sich die Umlenk- und Leitvorrichtung ohne weiteres an diesem Saugleitungsmundstück befestigen.

Um das Ende des Saugleitungsmundstücks besser in seiner Lage über dem Boden der Kanalsohle halten zu können und um insbesondere ein Wandern bzw. Verschwenken des Saugleitungsmundstücks aufgrund der durch die Düse im Betrieb ausgeübten Zugkraft auf den Hochdruckwasserschlauch, bis zur Anlage an der Kanalschachtwand zu verhindern, wird die Ausbildung vorzugsweise derart getroffen, daß auf der dem Arm abgewandten Seite des Saugleitungsmundstücks an diesem ein im frei herabhängenden Zustand unter das Saugleitungsmundstück hinabragendes Stützbein angelenkt ist, und daß die Schwenkwinkel des Arms und des Stützbeins derart beschränkt sind, daß das Saugleitungsmundstück in seiner auf die Kanalsohle abgesenkten Stellung in einem fixierten Abstand oberhalb der Kanalsohle gehalten wird.

Vorzugsweise sind die Länge des Arms und des Stützbeins sowie die Schwenkwinkel dieser beiden Teile so aufeinander abgestimmt, daß das Saugleitungsmundstück in seiner auf die Kanalsohle abgesenkten Stellung etwa vertikal ausgerichtet gehalten wird.

Es kann außerdem zweckmäßig sein, zusätzlich einen zur Abstandhaltung von der anstoßenden Kanalschachtwand dienenden, am Saugleitungsmundstück festen Abstandshaltearm vorzusehen, um ein Anliegen des Arms und seiner Führungsrollen und damit ggf. des Hochdruckwasserschlauchs an der Kanalschachtwand oder der Kanalwand zu vermeiden.

Als besonders vorteilhaft in dieser Hinsicht hat sich eine Ausbildung erwiesen, die sich dadurch auszeichnet, daß im Abstand von der Halterung des ersten Arms eine zweite Halterung an dem Saugleitungsmundstück befestigt ist, an der ein zweiter Arm verschwenkbar gehaltert ist, und daß das Ende des zweiten Arms derart mit dem ersten Arm gekoppelt ist, daß der zweite Arm bei einer Verschwenkung des ersten Arms auf der Kanalsohle in eine Spreizstellung bewegt wird. Wenn in diesem Fall die Länge des ersten Armes kleiner als der Durchmesser oder die Höhe des Abwasserkanals ist und die Länge des zweiten Armes ein Mehrfaches der Länge des ersten Arms und in jedem Fall eine größere Länge als die maximale Höhe der zu erwartenden Abwässerkanäle ist, so wird sichergestellt, daß selbst bei einer Verschiebung des Saugleitungsmundstücks auf der Kanalsohle die Umlenk- und Leitvorrichtung nur über ihren zweiten Arm zur Anlage gegen die Kanalschachtwand oder den Übergang zwischen der Kanalschachtwand und dem Abwasserkanal kommt. Erfolgt eine Anlage des zweiten Arms, so ist keine weitere Bewegung der Umlenk- und Leitvorrichtung in Verbindung mit dem Saugleitungsmundstück in Richtung des Abwasserkanals möglich und der Hochdruckwasserschlauch wird in einem sicheren Abstand von den Kanalwänden geführt.

Die Koppelung zwischen dem ersten und dem zweiten Arm erfolgt vorteilhafterweise derart, daß das Ende des zweiten Arms in einer mit dem ersten Arm verbundenen Gleitschiene geführt ist. Zu diesem Zweck kann an dem zweiten Arm etwa ein Kugelkopf befestigt sein, der in einer entsprechenden Führung in dem ersten Arm zwangsgeführt ist. Die Koppelung kann jedoch auch in Form eines Gleitstückes vorgesehen sein, das in einer entsprechenden Gleitschiene des ersten Armes geführt ist und das über ein Gelenk mit dem Ende des zweiten Arms verbunden ist.

Um einerseits die Lagebeständigkeit der Umlenk- und Leitvorrichtung und andererseits um auch einen vorbestimmten Abstand des Endes des Saugleitungsmundstückes von der Kanalsohle zu gewährleisten, wird zweckmäßigerweise das Saugmundstück an seinem gegen die Kanalsohle weisenden Ende mit einem die Öffnung des Saugmundstückes im Abstand von der Kanalsohle haltenden Vorsprung versehen.

Eine zweckmäßige Ausgestaltung ergibt sich dadurch, daß mit dem ersten Arm ein eine weitere Führungsrolle tragender Arm abgewinkelt fest verbunden ist, dessen freies Ende an dem Saugleitungsmundstück einen Anschlag findet. Hierdurch wird einerseits die Führung des Hochdruckwasserschlauches verbessert und andererseits kann der Schwenkwinkel des ersten Arms eingestellt werden.

Eine weitere Führungsrolle kann koaxial oder achsparallel zur Verschwenkachse des ersten Arms angebracht sein.

An dem freien Ende des ersten Arms kann ein Führungsrollenpaar für den Hochdruckwasserschlauch vorgesehen sein, von denen die untere Rolle ggf. auch als Laufrolle dienen kann, über die die Umlenk- und Leitvorrichtung beim Absenken in den Abwasserkanalschacht zunächst Bodenberührung mit der Kanalsohle bekommt und auf der Kanalsohle bei einer weiteren Absenkung des Hochdruckwasserschlauches zusammen mit dem Saugleitungsrohr entlangläuft, bis der erste Arm in seine Endlage verschwenkt ist.

Zweckmäßiger ist es jedoch, daß das Führungsrollenpaar lediglich zur Führung des Hochdruckwasserschlauches dient, während zusätzlich an dem vorderen Ende des ersten Armes ein Gleitstück gehaltert ist, das einerseits ein Gleiten des vorderen Endes des ersten Armes über die Kanalsohle beim Einführen der Vorrichtung in den Abwasserkanalschacht ermöglicht und andererseits im Betriebszustand ein festes Standbein für die gesamte Vorrichtung bildet.

Im folgenden soll die Erfindung näher anhand von in der Zeichnung dargestellten vorzugsweisen Ausführungsbeispielen erläutert werden. In der Zeichnung zeigen:

Fig. 1    ein erstes Ausführungsbeispiel einer Umlenk- und Leitvorrichtung beim Absenken in einen Kanalschacht,

Fig. 2    die in Figur 1 dargestellte Ausführungsform im aufgesetzten Zustand auf der Kanalsohle,

Fig. 3    eine zweite Ausführungsform einer erfindungsgemäßen Umlenk- und Leitvorrichtung im Zustand des Absenkens in einen Kanalschacht, und

Fig. 4    die in Figur 3 gezeigte Ausführungsform im aufgesetzten Zustand auf der Kanalsohle.

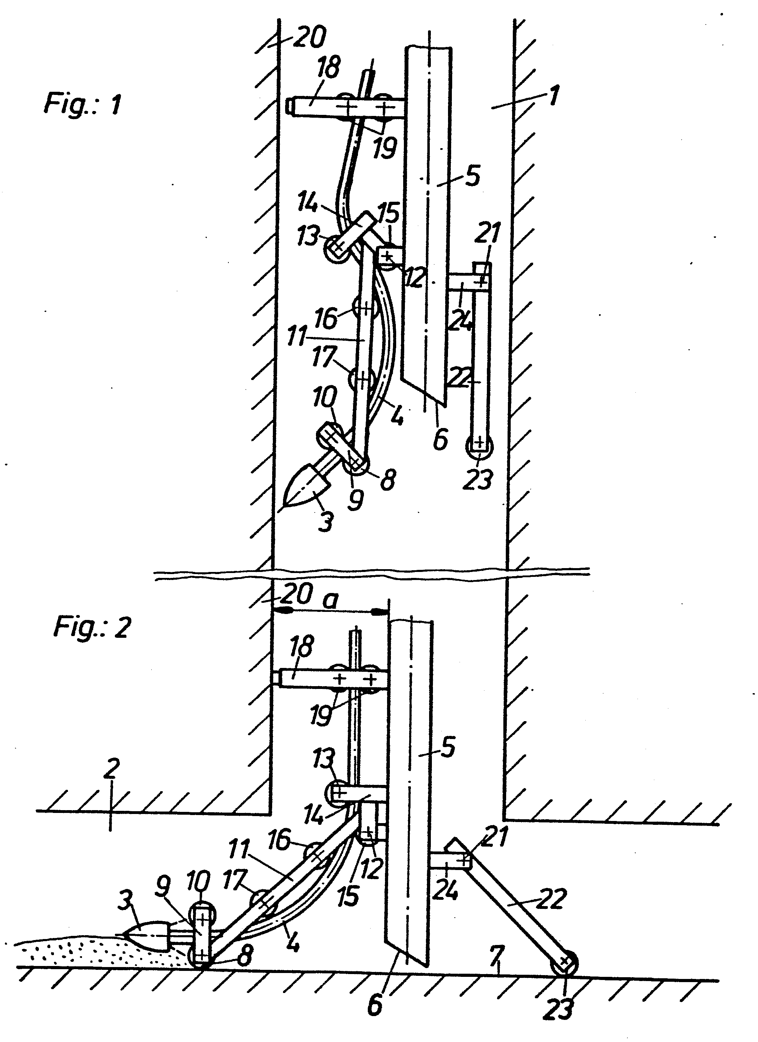

In den Schacht 1 eines Abwasserkanals 2 wird zur Reinigung desselben eine mit Hochdruckwasser betriebene Kanalreinigungsdüse 3 am vorlaufenden Anfang eines Hochdruckwasserschlauchs 4 zusammen mit dem Saugleitungsmundstück 5 zum Absaugen des dabei anfallenden Schlamms gemäß Fig. 1 eingesenkt. Bevor das Ende 6 des Saugleitungsmundstücks 5 die Sohle 7 des Schachts 1 erreicht, setzt die Rolle 8 einer mit einer weiteren Rolle 10 für den Hochdruckwasserschlauch 4 ausgerüsteten Hand 9 auf und läßt den an der Hand 9 fest sitzenden Arm 11 um sein Gelenk 12 an dem Saugleitungsmundstück 5 schwenken. Diese Schwenkbewegung findet ihr Ende durch Anschlagen eines eine weitere Führungsrolle 13 für den Hochdruckschlauch 4 tragenden zweiten starren Armes 14 an dem Saugleitungsmundstück 5, wie ein Vergleich zwischen Fig. 2 und 1 deutlich macht. Auf dem Gelenk 12 sitzt eine weitere Führungsrolle 15 und auf dem Arm 11 zwei weitere Führungsrollen 16 und 17. Sie alle bewirken ein sanftes Umlenken des Hochdruckschlauchs 4 und lassen jede Berührung mit der scharfen Eckkante zwischen dem Schacht 1 und dem Abwasserkanal 2 vermeiden. Wird nach Erreichen des Zustandes gemäß Fig. 2, wie dies ohne weiteres geschieht, die Kanalreinigungsdüse 3 mit Wasser unter sehr hohem Druck beaufschlagt, sorgen seine scharfen Strahlen für das Reinigen der Kanalwände. Gleichzeitig erfolgt durch Rückstoßstrahlen an der Düse 3 ein selbsttätiges Vorwärtsbewegen der Düse 3 unter Mit- und Nachziehen des Hochdruckwasserschlauches, wofür die sanfte Umlenkung durch die Führungsrollen ebenfalls eine Erleichterung schafft. Damit dabei das Saugleitungsmundstück 5 seine Lage nicht verändert, sorgt ein weiterer fest am Saugmundstück 5 sitzender Arm 18 mit einem weiteren Führungsrollenpaar 19 für die Einhaltung eines Abstandes a von der anstoßenden Schachtwand 20.

Auf der Anlenkstelle 12 für den Schwenkarm 11 gegenüberliegenden Seite des Saugleitungsmundstücks 5 ist an ihm bei 21 ein Stützbein 22 mit Laufrolle 23 angelenkt. Es ragt im frei hängenden Zustand ebenfalls unter das Ende 6 des Saugleitungsmundstücks 5, wie Fig. 1 erkennen läßt, und ist in seiner Schwenkbarkeit an 24 so begrenzt, daß im Zustand der Fig. 2 eine eindeutige Stützfixierung besteht. Damit erfährt das Saugmundstück 6 über der Sohle 7 einen fixierten Abstand, der eine optimale Schlammaufnahme gewährleistet. Durch die gesamte Abstützvorrichtung in Verbindung mit den zwangsläufig auftretenden Schlauchkräften ergibt sich eine automatische Fixierung, die den Hochdruckschlauch 4 an der Hand 9 während der Reinigungsfahrt seiner Düse 3 dicht über der Sohle 7 führen läßt.

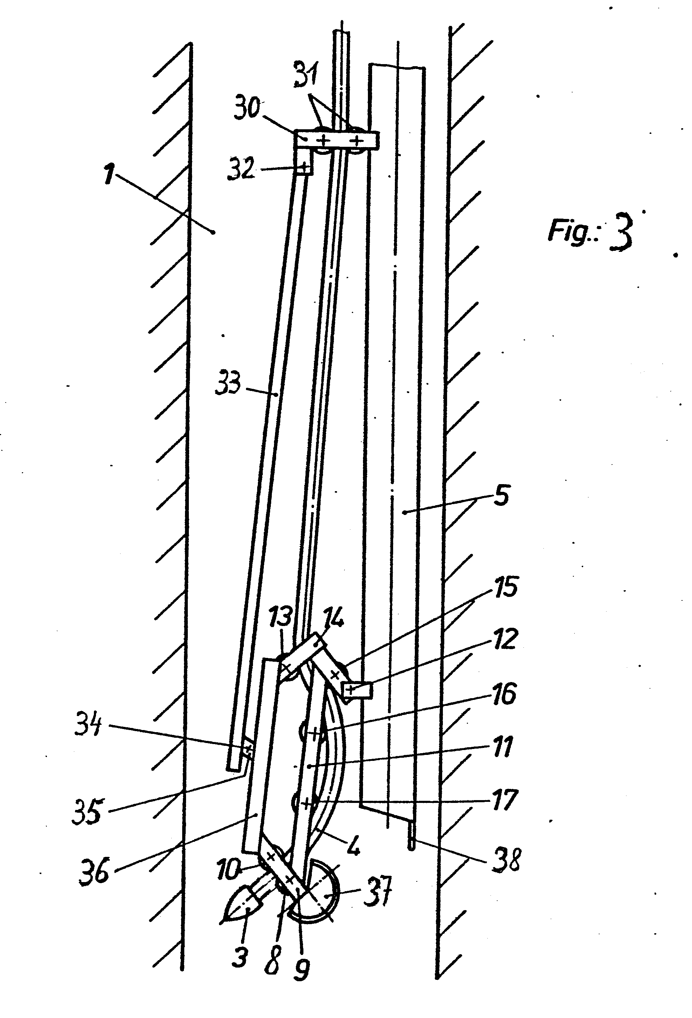

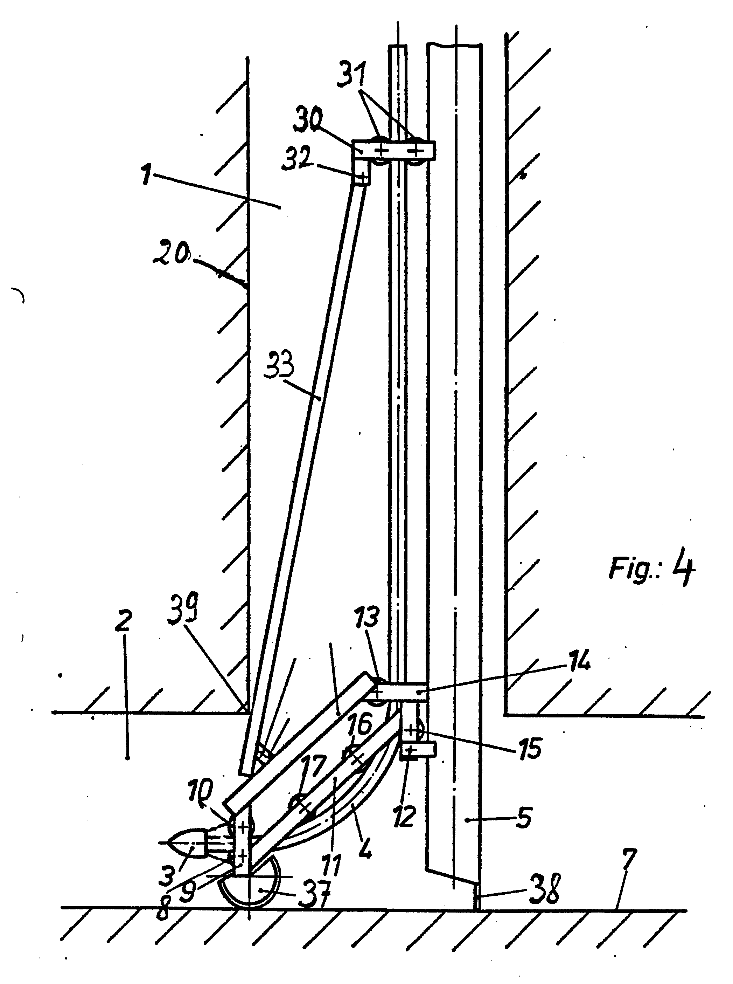

In der in den Figuren 3 und 4 dargestellten Ausführungsform sind gleiche Teile mit gleichen Bezugszeichen bezeichnet. Auf diese Teile soll im einzelnen nicht nochmals eingegangen, sondern es sollen lediglich die Unterschiede beschrieben werden.

In einem Abstand oberhalb des Anlagepunktes des zweiten starren Arms 14 im Betriebszustand an dem Saugleitungsmundstück 5 ist an diesem eine zweite Halterung 30 in Form eines Auslegers fest an dem Saugleitungsmundstück befestigt. Dieser Ausleger 30 trägt ein weiteres Führungsrollenpaar 31 für die Führung des Hochdruckwasserschlauches. An dem freien Ende des Auslegers 30 ist im Anlenkpunkt 32 ein zweiter Arm 33 angelenkt. Dieser Arm ist vorzugsweise in

0131276

Form einer geraden Stange ausgebildet, deren Länge ein Vielfaches der Länge des ersten Armes 11 beträgt. Zweckmäßigerweise liegt die Länge des zweiten Armes 33 zwischen etwa dem Zwei- und dem Fünffachen der Länge des ersten Armes 11. An dem freien Ende des zweiten Armes 33 ist über eine Anlenkstelle 34 ein Gleitstück 35 verschwenkbar befestigt. Das Gleitstück 35 läuft in einer Gleitführungsschiene 36, die an den freien Enden der Hand 9 und des zweiten starren Arms 14 befestigt ist und somit starr mit dem ersten Arm 11 verbunden ist.

An der Hand 9 ist an dem unteren Ende des ersten Armes 11 ein entweder teilkugelförmiges oder teilzylinderförmiges Gleitstück 37 befestigt.

Weiterhin weist das untere Ende des Saugleitungsmundstücks 5 einen nach abwärts vorstehenden Vorsprung 38 auf.

Die Funktionsweise der Vorrichtung ist wie folgt:

Beim gemeinsamen Absenken des Saugleitungsmundstücks 5 und der an dem Hochdruckwasserschlauch 4 vorgesehenen Kanalreinigungsdüse 3 befinden sich gemäß Fig. 3 sowohl der erste Arm 11 wie auch der zweite Arm 33 in einer im wesentlichen parallel zu dem Saugleitungsmundstück 5 verschwenkten, jedoch noch leicht hiergegen gespreizten Stellung. Bei dem weiteren Absenken erreicht zunächst das Gleitstück 37 den Kanalboden und gleitet in der in der Fig. 3 gezeigten Stellung aufgrund des Gewichts der Gesamtanordnung nach links. Hierbei wird der Arm 11 gegenüber dem Saugleitungsmundstück 5, das weiterhin in einer vertikalen Lage verbleibt, solange verschwenkt, bis der zweite starre Arm 14 zur Anlage gegen das Saugleitungsmundstück 5 kommt. Der Vorsprung 38 an dem Saugleitungsmundstück ist so bemessen, daß dieses zum gleichen Zeitpunkt auf der Kanalsohle 7 aufsetzt.
Das untere Ende des Saugleitungsmundstücks 5 wird hierdurch in einem vorbestimmten Abstand von der Kanalsohle gehalten. Während der Verschwenkung des ersten Armes 11 gleitet das Gleitstück 35

in der Gleitführungsschiene 36, wodurch gleichzeitig der zweite Arm 33 in die in Fig. 4 gezeigte Spreizstellung verschwenkt wird. Wie aus Fig. 4 ersichtlich ist, kommt, falls die Anordnung während des Betriebs aufgrund des Zugs der Kanalreinigungsdüse 3 nach links in Fig. 4 verschoben werden sollte, die gesamte Anordnung über den zweiten Arm 33 zur Anlage gegen die Kanalschachtwand 20 bzw. die Kante 39 zwischen dem Kanalschacht 20 und dem Abwasserkanal 2. Auf diese Weise wird der Hochdruckwasserschlauch 4 während des ganzen Betriebs und auch während des Einziehens nach dem Betrieb sicher im Abstand von den jeweiligen Wänden gehalten.

## Patentansprüche

1. In einen Abwasserkanalschacht (1) einsenkbare, auf der Kanalsohle (7) abstützfähige Umlenk- und Leitvorrichtung mit Führungsrollen (16, 17) für einen Hochdruckwasserschlauch (4), der an seinem vorauslaufenden Ende eine Kanalreinigungsdüse (3) aufweist und durch Rückstoßstrahlen aus der Düse durch den Kanal (2) ziehbar ist, dadurch g e k e n n z e i c h n e t, daß die Führungsrollen (16, 17) an einem Arm (11) befestigt sind, der an einem steifen Saugleitungsmundstück (5) angelenkt ist, im frei herabhängenden Zustand unter das Saugleitungsmundstück (5) hinabragt und auf der Kanalsohle (7) in eine den Hochdruckschlauch (4) etwa in Sohlenneigung ausrichtende Arbeitsposition schwenkbar ist.

2. Vorrichtung nach Anspruch 1, dadurch g e k e n n z e i c h - n e t , daß auf der dem Arm (11) abgewandten Umfangsseite des Saugleitungsmundstücks (5) an diesem ein im frei herabhängenden Zustand unter das Saugleitungsmundstück hinabragendes Stützbein (22) angelenkt ist und daß die Schwenkwinkel des Arms (11) und des Stützbeins (22) derart beschränkt sind, daß das Saugleitungsmundstück (5) in seiner auf die Kanalsohle abgesenkten Stellung in einem fixierten Abstand oberhalb der Kanalsohle (7) gehalten wird.

3. Vorrichtung nach Anspruch 2, dadurch g e k e n n z e i c h - n e t , daß das Saugleitungsmundstück (5) in seiner auf die Kanalsohle (7) abgesenkten Stellung etwa vertikal ausgerichtet gehalten wird.

4. Vorrichtung nach einem der Ansprüche 1 bis 3, g e k e n n - z e i c h n e t durch einen zur Abstandhaltung von der anstoßenden Kanalschachtwand (20) dienenden, am Saugleitungsmundstück (5) festen Abstandhaltearm (18).

5. Vorrichtung nach einem der Ansprüche 1 bis 4, dadurch g e k e n n - z e i c h n e t , daß im Abstand von der Halterung des ersten Arms (11) eine zweite Halterung (30) an dem Saugleitungsmundstück (5) befestigt ist, an der ein zweiter Arm (33) verschwenkbar gehalten ist, und daß das Ende des zweiten Arms (33) derart mit dem ersten Arm (11) gekoppelt ist, daß der zweite Arm (33) bei einer Verschwenkung des ersten Arms (11) auf der Kanalsohle (7) in eine Spreizstellung bewegt wird.

6. Vorrichtung nach Anspruch 5, dadurch g e k e n n z e i c h - n e t , daß das Ende des zweiten Arms (33) in einer mit dem ersten Arm (11) verbundenen Gleitschiene (36) geführt ist.

7. Vorrichtung nach Anspruch 5 oder 6 , dadurch g e k e n n - z e i c h n e t , daß das Saugmundstück (5) an seinem gegen die Kanalsohle (7) weisenden Ende einen die Öffnung des Saugmundstücks im Abstand von der Kanalsohle haltenden Vorsprung (38) aufweist.

8. Vorrichtung nach einem der Ansprüche 1 bis 7, dadurch g e - k e n n z e i c h n e t , daß mit dem ersten Arm (11) ein eine weitere Führungsrolle (13) tragender Arm (14) abgewinkelt fest verbunden ist, dessen freies Ende an dem Saugleitungsmundstück (5) einen Anschlag findet.

9. Vorrichtung nach einem der Ansprüche 1 bis 8, g e k e n n - z e i c h n e t durch eine weitere Führungsrolle (15) koaxial oder achsparallel zur Verschwenkachse (12) des ersten Arms (11).

10. Vorrichtung nach einem der Ansprüche 1 bis 9, g e k e n n - z e i c h n e t durch ein Führungsrollenpaar (8, 10) an dem freien Ende des ersten Armes (11), von denen die untere Rolle (8) ggf. auch als Laufrolle dient.

11. Vorrichtung nach einem der Ansprüche 1 bis 10, dadurch g e - k e n n z e i c h n e t , daß an dem freien Ende des ersten Arms (11) ein Gleitstück (37) gehaltert ist.

Fig.: 1

Fig.: 2

Fig.: 3

0131276

Fig.: 4